Europäisches Patentamt

European Patent Office

Office européen des brevets

(19)

(11) Veröffentlichungsnummer: **0 297 359 B1**

# EUROPÄISCHE PATENTSCHRIFT

(45) Veröffentlichungstag der Patentschrift: **19.08.92**

(51) Int. Cl.⁵: **F16D 3/50**

(21) Anmeldenummer: **88109608.5**

(22) Anmeldetag: **16.06.88**

(54) **Flexible Gelenkverbindung zweier Wellen, insbesondere für Schaltgestänge von Kraftfahrzeuggetrieben.**

(30) Priorität: **03.07.87 DE 3722033**

(43) Veröffentlichungstag der Anmeldung:
**04.01.89 Patentblatt 89/01**

(45) Bekanntmachung des Hinweises auf die
Patenterteilung:
**19.08.92 Patentblatt 92/34**

(84) Benannte Vertragsstaaten:
**DE ES FR GB IT NL**

(56) Entgegenhaltungen:
DE-A- 1 931 577        DE-A- 2 157 089
DE-C- 411 559          FR-A- 933 252
FR-A- 2 123 008        GB-A- 11 166
GB-A- 861 600          US-A- 3 935 716

(73) Patentinhaber: **Adam Opel Aktiengesellschaft
Bahnhofsplatz 1 Postfach 17 10
W-6090 Rüsselsheim(DE)**

(72) Erfinder: **Renk, Rolf, Dipl.-Ing. (FH)
Karl-Ulrich-Strasse 13
W-6095 Ginsheim(DE)**

(74) Vertreter: **Bergerin, Ralf, Dipl.-Ing. et al
Adam Opel AG, Bahnhofsplatz 1 Postfach 17
10
W-6090 Rüsselsheim(DE)**

**Beschreibung**

Die Erfindung bezieht sich auf eine flexible Gelenkverbindung zweier Wellen, insbesondere für Schaltgestänge von Kraftfahrzeuggetrieben, wobei die einander zugewandten Wellenenden durch ein bandförmiges Übertragungsglied miteinander verbunden sind.

Bei Schaltgetrieben von Kraftfahrzeugen muß der Schalthebel in Reichweite des Fahrers liegen, wohingegen das Getriebe meistens räumlich dem Motor zugeordnet bzw. an diesem angeflanscht ist. Zwangsläufig ergeben sich hierdurch zu überbrükkende Entfernungen zwischen Schalthebel und Getriebe, die bei querliegenden Fahrzeugantriebsaggregaten naturgemäß besonders groß sind. Als Verbindungselemente zwischen Schalthebel und Getriebe dienen üblicherweise starre Stangen, die durch Gelenke miteinander verbunden sind. Diese Gestänge müssen in axialer Richtung (Schaltrichtung) und in Drehrichtung (Wählbewegung) gleichermaßen Kräfte übertragen können. Für die exakte Schaltung der Gänge ist es erforderlich, daß die Übertragung der Wählbewegung ohne Drehwinkelverlust in das Getriebe gelangt, wohingegen bei der Schaltbewegung zumeist Dämpfung oder sogar ein definiertes Spiel zu Vermeidung von Schalthebelschütteln (verursacht durch Motorbewegungen) verlangt wird.

Um die einzelnen Gestängeteile, die wegen der konstruktiven Gegebenheiten des Fahrzeugs nicht geradlinig/koaxial angeordnet sein können, sondern in mehr oder weniger großen Winkeln zueinander stehen, zu verbinden, ist es bekannt, Kardangelenke zu verwenden. Diese erfüllen aber in der Regel nicht die oben angegebenen Anforderungen. So sind die bekannten Kardangelenke in Schaltgestängen schon von Haus aus durch hohe Herstellungskosten gekennzeichnet. Darüber hinaus sind sie entweder in Drehrichtung nicht steif genug oder sie besitzen in axialer Richtung kein Spiel und keine Dämpfungswirkung. Außerdem weisen die bekannten Kardangelenke ein relativ hohes Gewicht auf und müssen gewartet werden (Schmierung).

Des weiteren ist es bekannt, zur gelenkigen Verbindung zweier Wellen ein bandförmiges Übertragungsglied zu verwenden. Eine derartige flexible Kupplung, die allerdings nicht für Schaltgestänge von Kraftfahrzeuggetrieben vorgesehen ist, zeigt die US-PS 3,224,224. Hierbei kommt ein bandförmiges Übertragungsglied zur Anwendung, welches im nichtmontierten Ausgangszustand sternförmig ausgebildet ist. Bei der Montage wird dann die eine Hälfte der einander gegenüberliegenden Sternarme zum einen Wellenende hin gebogen und mit diesem verbunden, während die andere Hälfte der Sternarme entsprechend am anderen Wellenende befestigt wird. Hierdurch ergibt sich eine Gelenkverbindung, die nicht nur in Axial- sondern auch in Drehrichtung elastisch ist.

Eine ähnliche elastische Kupplung mit entsprechenden Nachteilen ist auch aus der US-PS 2,903,867 ersichtlich. Die bekannten flexiblen Kupplungen nach den US-PS'n 3,224,224 und 2,903,867 genügen daher nicht den an Gelenkverbindungen von Schaltgestängen von Kraftfahrzeugen zu stellenden obengenannten Anforderungen.

Eine federnde Gelenkkupplung der eingangs bezeichneten Art ist ferner durch die DE-PS 300 336 bekannt geworden. Sie zeichnet sich nachteiligerweise durch großen Raumbedarf und hohe Herstellungskosten aus. Außerdem besitzt die bekannte Kupplung kein definiertes Spiel in axialer Richtung, und es sind nur geringe Gelenkwinkel möglich (schätzungsweise maximal 5°). Eine Übertragung von Axialkräften ist nicht realisierbar.

Das im Vorstehenden zur DE-PS 300 336 Gesagte gilt entsprechend auch für eine durch die DE-OS 28 34 070 bekannt gewordene "Vorrichtung zur starren, umfangsspielfreien, aber axial nachgiebigen Wellenverbindung", ebenso für eine flexible Kupplung nach US-PS 2,855,767.

Aufgabe der vorliegenden Erfindung ist es, eine flexible Gelenkverbindung der eingangs bezeichneten Art zu schaffen, die einfach und raumsparend in ihrem Aufbau sowie kostengünstig herstellbar ist und die eine große Steifigkeit in Drehrichtung bei zugleich ausreichender Nachgiebigkeit in Axialrichtung gewährleistet. Außerdem soll konstruktiv die Möglichkeit der Übertragung von Axialkräften gegeben sein.

Gemäß der Erfindung wird die Aufgabe dadurch gelöst, daß das bandförmige Übertragungsglied im Montagezustand rechteckig/ebenflächig oder im wesentlichen rechteckig/ebenflächig ausgebildet und (im unverspannten Zustand) orthogonal oder im wesentlichen orthogonal zur Wellenachse zwischen den beiden Wellenenden angeordnet ist, und daß das eine Wellenende am einen Bandende und das andere Wellenende am gegenüberliegenden anderen Bandende angreift, derart, daß das bandförmige Übertragungsglied ausschließlich oder nahezu ausschließlich zur Drehmomentübertragung zwischen den beiden Wellen dient.

Das erfindungsgemäße, vorzugsweise dünnwandige, bandförmige Übertragungsglied ist also im Gelenk so angeordnet, daß seine Elastizität zwischen den beiden gegenüberliegenden eingespannten Seiten für die Gelenkfunktion und das eventuell geforderte axiale Spiel ausgenutzt wird, während sein hohes Widerstandsmoment (und damit seine hohe Steifigkeit) um die Mittelachse für die (spielfreie) Weiterleitung der Drehbewegung benutzt wird. Das hohe Widerstandsmoment um die Mittelachse bleibt vorteilhafterweise auch dann noch voll wirksam, wenn das bandförmige Übertragungsglied während der Gelenkfunktion verschränkt und/oder gebogen ist. Im praktischen Fall überlagern sich somit die Verformungen des bandförmigen Übertragungsgliedes zur Gewährleistung der Gelenkfunktion in horizontaler und vertikaler Richtung.

Zusammengefaßt bestehen die wesentlichen Vorteile des erfindungsgemäßen Gelenkes in einer hohen Steifigkeit in Drehrichtung, in einem nur geringen Gewicht, in nahezu unbegrenzter Verschleißfestigkeit und damit langer Lebensdauer, in der Fähigkeit, Geräusche und Schwingungen zu dämpfen, sowie ferner darin, daß keine Schmierung erforderlich ist und daß ein definiertes Spiel in axialer Richtung ermöglicht wird.

Zur praktischen Verwirklichung des Grundgedankens der Erfindung wird vorgeschlagen, daß die beiden gegenüberliegenden Enden des bandförmigen Übertragungsglieds Verstärkungselemente aufweisen, mittels derer sie mit an den zugeordneten Wellenenden befestigten Auslegern zusammenwirken.

Nach einer bevorzugten Ausführungsform der Erfindung besteht das bandförmige Übertragungsglied aus thermoplastischem Kunststoff und ist als Spritzteil ausgebildet. Zur Verstärkung kann das bandförmige Übertragungsglied Einlagen aus Gewebe oder Draht enthalten.

Die zur Verbindung des bandförmigen Übertragungsgliedes mit den zugeordneten Wellenenden dienenden Verstärkungselemente können einstückig an das bandförmige Übertragungsglied angeformt, vorzugsweise angespritzt sein. Es ist aber auch möglich, die Verstärkungselemente aus einem anderen Material als das eigentliche bandförmige Übertragungsglied zu fertigen und die Bandenden in die Verstärkungselemente einzukleben, einzuklemmen oder einzuspritzen oder mit den Verstärkungselementen zu vernieten oder zu verschrauben.

Weitere Ausgestaltungen und Vorteile der Erfindung können den Unteransprüchen entnommen werden.

Zur Veranschaulichung und näheren Erläuterung der Erfindung dienen des weiteren Ausführungsbeispiele, die in der Zeichnung dargestellt und nachstehend beschrieben sind. Es zeigt:

Fig. 1     eine sogenannte externe Schaltbetätigung für ein Kraftfahrzeuggetriebe, mit zwei Gelenken, die jeweils Dreh- und Axialkräfte übertragen,

Fig. 2     eine externe Schaltbetätigung, bei der nur eine einziges Dreh- und Axialkräfte übertragendes Gelenk Verwendung findet,

Fig. 3     eine Ausführungsform des erfindungsgemäßen flexiblen Gelenks, mit den nur Drehmomente, nicht jedoch Axialkräfte übertragen werden können, in Seitenansicht betrachtet und ohne Winkelausschlag zwischen den beiden verbundenen Wellen,

Fig. 4     das Gelenk nach Fig. 3, in Pfeilrichtung A (Fig. 3) gesehen,

Fig. 5     das Gelenk nach Fig. 3 und 4, in Darstellung entsprechend Fig. 4, jedoch mit einem (nur) in der Vertikalebene liegenden Winkelausschlag zwischen den beiden Wellen,

Fig. 6     eine (schematische) Darstellung des Gelenks nach Fig. 3 bis 5, in Draufsicht gesehen, mit einem (nur) in der Horizontalebene liegenden Winkelausschlag,

Fig. 7a bis 7c     eine in den drei Hauptansichten separat dargestelltes bandförmiges Übertragungsglied, welches entsprechend der Ausführungsform nach Fig. 6 verformt ist,

Fig. 8     eine Ausführungsform eines bandförmigen Übertragungsgliedes, in Darstellung ensprechend Fig. 3,

Fig. 9     den Gegenstand von Fig. 8, in Pfeilrichtung B gesehen,

Fig. 10     eine andere Ausführungsform eines bandförmigen Übertragungsgliedes, in Darstellung entsprechend Fig. 8,

Fig. 11     den Gegenstand von Fig. 10, in Pfeilrichtung C gesehen,

Fig. 12     eine weitere Ausführungsform eines bandförmigen Übertragungsgliedes, in Darstellung entsprechend Fig. 8 und 10,

Fig. 13     den Gegenstand von Fig. 12, in Pfeilrichtung D gesehen,

Fig. 14     eine weitere Ausführungsform eines bandförmigen Übertragungsgliedes, in Darstellung entsprechend Fig. 8, 10 oder 12,

Fig. 15     den Gegenstand von Fig. 14, in Pfeilrichtung E gesehen,

Fig. 16     eine Ausführungsform des erfindungsgemäßen flexiblen Gelenks, mit dem Drehmomente und Axialkräfte - ohne axiale Dämpfung und ohne axiales Spiel - übertragen werden können, in Darstellung entsprechend Fig. 3,

Fig. 17 den Gegenstand von Fig. 16, in Draufsicht betrachtet,

Fig. 18 - in Ansicht entsprechend Fig. 16 - eine Abwandlung des Gelenks nach Fig. 16 und 17, dahingehend, daß axiales Spiel vorgesehen ist,

Fig. 19 den Gegenstand von Fig. 18, in Draufsicht betrachtet,

Fig. 20 - in Ansicht entsprechend Fig. 16 oder 18 - eine Abwandlung des Gelenks nach Fig. 16, dahingehend, daß axiale Dämpfung, jedoch kein axiales Spiel vorgesehen ist,

Fig. 21 den Gegenstand von Fig. 20, in Draufsicht betrachtet,

Fig. 22 - in Ansicht entsprechend Fig. 16, 18 oder 20 - eine Abwandlung des Gelenks nach Fig. 20, dahingehend, daß nicht nur axiale Dämpfung, sondern auch axiales Spiel vorgesehen ist,

Fig. 23 den Gegenstand von Fig. 22, in Draufsicht betrachtet,

Fig. 24 eine Anwendung des erfindungsgemäßen bandförmigen Übertragungsgliedes für einen speziellen Konstruktionsfall, und

Fig. 25 den Gegenstand von Fig. 24, in Pfeilrichtung F gesehen.

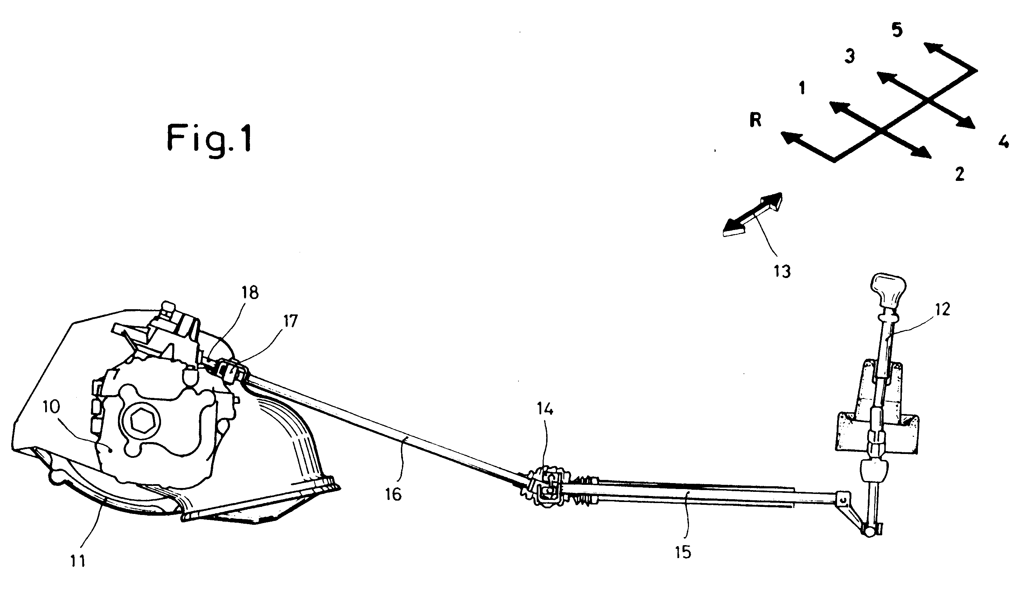

Bei der externen Schaltbetätigung nach Fig. 1 bezeichnet 10 ein an eine querliegende Brennkraftmaschine 11 angeflanschtes Schaltgetriebe für einen Personenkraftwagen. Zur Betätigung dient ein in üblicher Weise ausgebildeter und gelagerter Schaltknüppel 12. Fig. 1 zeigt ferner das übliche Schaltschema einer Knüppelschaltung, bei der die numerierten Pfeile und der mit "R" bezeichnete Pfeil die Schaltrichtung zum Einlegen des jeweiligen Ganges kennzeichnen, während die Wählrichtung durch einen Doppelpfeil 13 angedeutet ist.

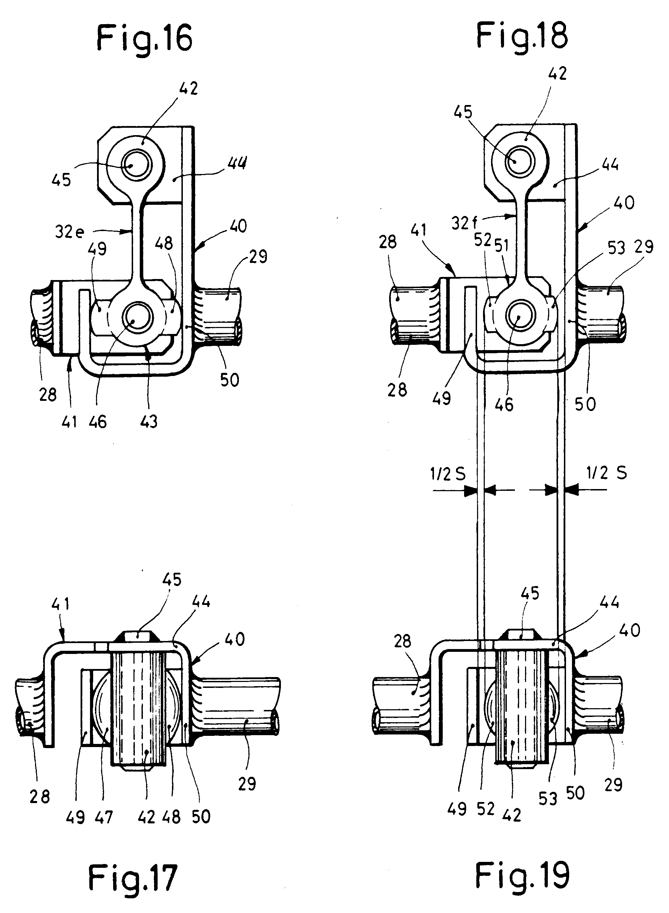

Zur Übertragung der am Schaltknüppel 12 manuell aufgebrachten Schalt- und Wählkräfte bzw. der dabei vom Schaltknüppel 12 ausgeführten Bewegungen ist ein Schaltgestänge vorgesehen, das im wesentlichen aus zwei durch ein Gelenk 14 verbundenen Schaltstangen 15, 16 besteht. Das Gelenk 14 muß in der Lage sein, sowohl (die beim Schaltvorgang entstehenden) Axialkräfte und -bewegungen wie auch (die mit der Wählbewegung verbundenen) Drehmomente und -bewegungen von der Schaltstange 15 auf die hierzu im stumpfen Winkel stehende zweite Schaltstange 16 zu übertragen. Am getriebeseitigen Ende der Schaltstange 16 sit noch eine zweites Gelenk 17 vorgesehen, welches zur Übertragung der genannten Kräfte und Bewegungen auf eine mit 18 bezifferte Getriebeschaltstange dient. Die Anforderungen an das Gelenk 17 entsprechen denen an das Gelenk 14, so daß die beiden Gelenke 14, 17 im wesentlichen gleich oder ähnlich gestaltet sein können. Mögliche Ausführungsformen für die Gelenke 14, 17 zeigen beispielsweise die weiter unten noch im einzelnen beschriebenen Figuren 16 bis 23.

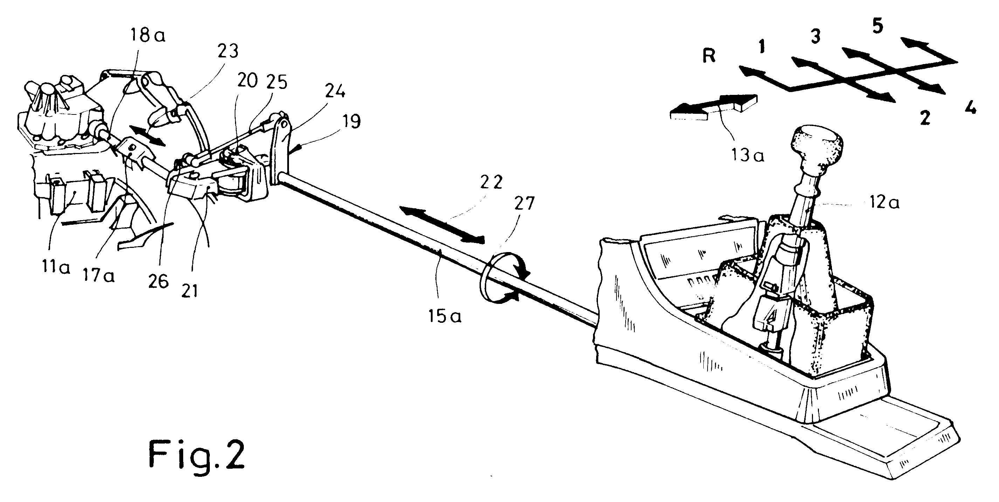

Bei der Ausführungsform nach Fig. 2 sind aus Gründen der Einfachheit und Übersichtlichkeit Teile, die der Ausführungsform nach Fig. 1 entsprechen oder ähneln, mit gleichen Bezugzeichen wie dort, nur ergänzt durch den Buchstaben "a" bezeichnet. Der wesentliche Unterschied der Ausführungsform nach Fig. 2 zu der nach Fig. 1 besteht darin, daß nur eine Schaltstange - mit 15a beziffert - und entsprechend auch nur ein "Kardangelenk" vorgesehen ist, welches mit 17a bezeichnet ist. Allerdings ergibt sich dadurch bei der Variante nach Fig. 2 die Notwendigkeit eines Hebelmechanismus', der insgesamt mit 19 beziffert ist. Dieser besteht einmal aus einem bei 20 gelagerten Doppelhebel 21, der die Aufgabe hat, Axialkräfte und -bewegungen von der Schaltstange 15a auf die Getriebeschaltstange 18a zu übertragen (vgl. Doppelpfeile 22 und 23). Mit dem Doppelhebel 21 verbunden ist ferner ein aus drei Einzelhebeln 24, 25, 26 bestehender Mechanismus mit der Funktion, Drehmomente und -bewegungen von der Schaltstange 15a auf die Getriebeschaltstange 18a überzuleiten (vgl. Doppelpfeil 27). Das Gelenk 17a erfüllt im übrigen die gleiche Aufgabe wie das Gelenk 17 bei der Ausführungsform nach Fig. 1.

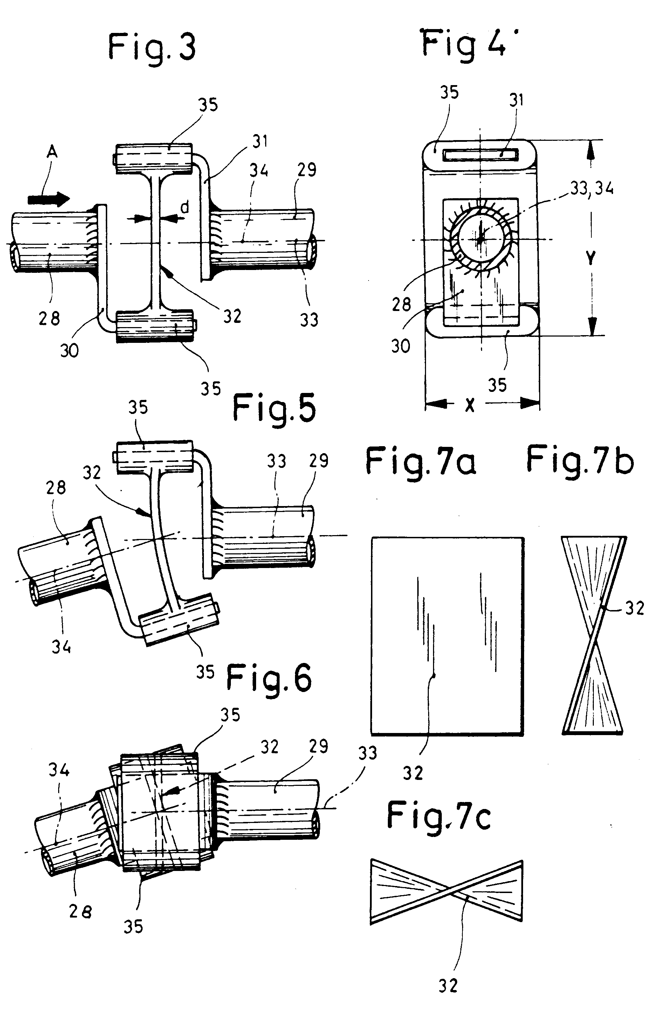

In Fig. 3 bis 6 ist nun eine Gelenkvariante gezeigt, die nur zur Übertragung von Drehmomenten, d. h. nicht auch zur Weiterleitung von Axialkräften, vorgesehen ist. Hierbei bezeichnet 28, 29 zwei gelenkig zur verbindende Stangen bzw. Wellen (in der Praxis zumeist Rohre). An jedem der einander zugewandten Wellenenden ist ein winkelförmig abgebogener Ausleger 30 bzw. 31 angeschweißt. Symmetrisch zwischen den beiden Wellenenden ist ein zum Beispiel aus thermoplastischem Material bestehendes und als Spritzteil ausgebildetes bandförmiges Übertragungsglied 32 angeordnet, welches zur Übertragung von Drehmomenten und -bewegungen von der Welle 28 auf die Welle 29 (oder in umgekehrter Richtung) dient. Das bandförmige Übertragungsglied 32 weist eine verhältnismäßig geringe Dicke d auf und bildet im unverspannten Zustand (Fig. 3) eine Vertikalebene zur (gemeinsamen) Achse 33, 34 der beiden Wellen 28, 29, wobei sich die Mittelachse des bandförmigen Übertragungsgliedes 32 mit den beiden (fluchtenden) Wellenachsen 33, 34 deckt.

Fig. 3 und 4 machen deutlich, daß das bandförmige Übertragungsglied 32 symmetrisch ausgebildet ist, derart, daß es an zwei einander gegenüberliegenden Enden (in Fig. 3 bis 5 jeweils oben und unten) in ein ösenförmiges Verstärkungselement 35 übergeht. Die ösenförmigen Verstärkungselemente 35 sind jeweils auf die horizontal abgebogenen Enden der Ausleger 30, 31 aufgepreßt (vgl. insbesondere Fig. 4).

Je nach praktischem Verwendungsfall und Einbauverhältnissen können die Abmessungen Y, d und X des bandförmigen Übertragungsglieds 32 etwa wie folgt variiert werden:

a) Y groß, d und X klein: Diese Maßnahme ergibt eine hohe Flexibilität des bandförmigen Übertragungsgliedes 32.

b) X und d groß, Y klein: Hierbei zeichnet sich dann das bandförmige Übertragungsglied 32 durch sehr hohe Steifigkeit in Verdrehrichtung aus.

Bei dem in Fig. 5 gezeigten Zustand des Gelenks bildet die Welle 28 gegenüber der Welle 29 einen Winkelausschlag in vertikaler Richtung. Der Winkelausschlag wird durch entsprechende flexible Verformung des bandförmigen Übertragungsgliedes 32 ermöglicht, wobei dieses jedoch weiterhin seine Fähigkeit, Drehmomente zu übertragen, in nahezu unverändertem Maße behält.

Bei der Darstellung nach Fig. 6 bildet wiederum die Welle 28 gegenüber der Welle 29 einen Winkelausschlag, in diesem Falle jedoch in Horizontalrichtung (bezogen auf Fig. 3). Auch dieser Winkelausschlag wird durch entsprechende flexible Verformung des bandförmigen Übertragungsgliedes 32 ermöglicht, wie dies besonders gut aus Fig. 7a bis 7c erkennbar ist. Durch die Verformung des bandförmigen Übertragungsgliedes 32 wird dessen Fähigkeit, Drehmomente zu übertragen, wiederum nicht, zumindest nicht nennenswert, beeinträchtigt. Dasselbe gilt auch für eine gleichzeitige Überlagerung von Winkelausschlägen der in Fig. 5 und 6 gezeigten Art, wie sie ja (in periodisch an- und abschwellender Weise) bei Drehbewegungen der beiden im Winkel zueinander stehenden Wellen 28, 29 ständig vorkommen.

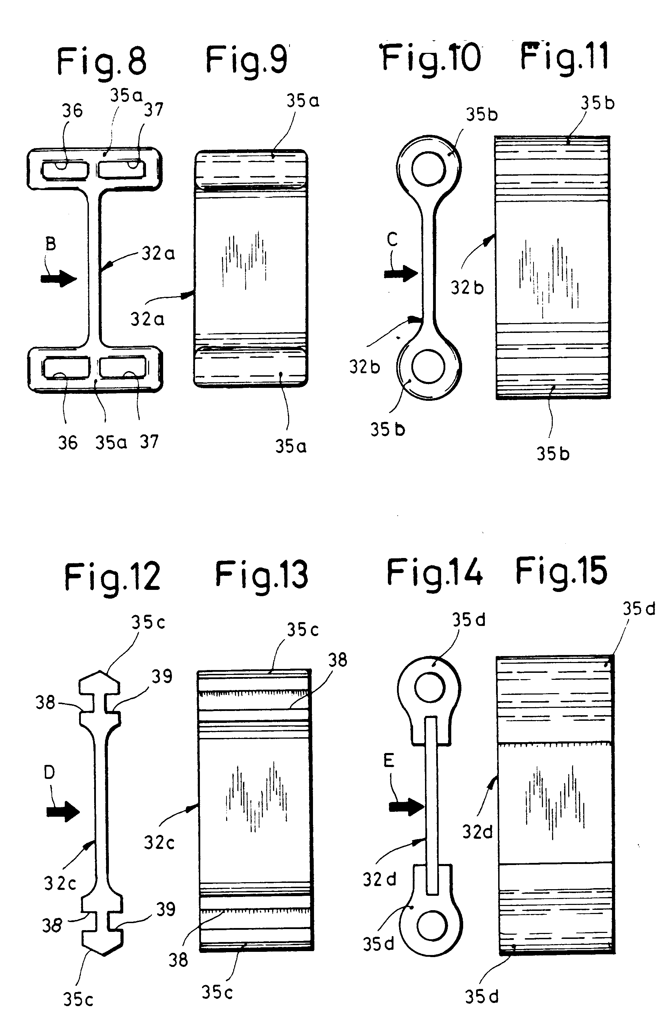

Fig. 8 und 9 zeigen nun eine gegenüber der Ausführungsform nach Fig. 3 bis 6 geringfügig abgewandelte Variante eines bandförmigen Übertragungsgliedes 32a. Der Unterschied gegenüber der Ausführungsform nach Fig. 3 bis 6 besteht darin, daß die ösenförmigen Verstärkungselemente - hier mit 35a bezeichnet - jeweils zwei nebeneinanderliegende Öffnungen 36, 37 besitzen. Entsprechend sollten auch die mit den Verstärkungselementen 35a zusammenwirkenden Ausleger der beiden zu verbindenden Wellen (in Fig. 8 und 9 nicht gezeigt) ausgebildet sein.

Eine weitere Gestaltungsmöglichkeit für ein bandförmiges Übertragungsglied zeigen Fig. 10 und 11. Das bandförmige Übertragungsglied ist hier mit 32b bezeichnet und besitzt zwei gleichartige, im Querschnitt als Ringe ausgebildete ösenförmige Verstärkungselemente 35b.

Bei der Ausführungsform nach Fig. 12 und 13 sind die hier mit 35c bezeichneten Verstärkungselemente des bandförmigen Übertragungsgliedes 32c doppel-T-förmig ausgebildet. Hierdurch ergeben sich jeweils zwei seitliche Aussparungen 38, 39, in die entsprechend komplementär gestaltete Auslegerarme der zu verbindenden Wellen (nicht gezeigt) von der Seite her eingreifen können.

Gemeinsames Merkmal der Ausführungsformen nach Fig. 3 bis 6 und 8 bis 13 ist, daß das bandförmige Übertragungsglied 32 bis 32c mit seinen Verstärkungselementen 35 bis 35c jeweils einstückig ausgebildet ist. Es bietet sich hierfür eine Herstellung als Kunststoff-Spritzteil an, wobei das Material zweckmäßigerweise noch durch Einlagen aus Gewebe oder Draht verstärkt werden kann.

Bei der - im übrigen der Ausführungsform nach Fig. 10 und 11 ähnelnden - Variante nach Fig. 14 und 15 dagegen sind bandförmiges Übertragungsglied 32d und Verstärkungselemente 35d als Separatteile hergestellt. Die Verstärkungselemente 35d können hier aus einem anderen Material, z. B. einem Metall oder einer Legierung, als das eigentliche bandförmige Übertragungsglied 32d bestehen. Dies kann erforderlich werden, wenn besondere Ansprüche, z. B. an Temperaturverhalten oder Festigkeit, gestellt werden. Die Befestigung der Verstärkungselemente 35d an den Enden des eigentlichen bandförmigen Übertragungsglieds 32d kann durch Einkleben, Einklemmen oder Einspritzen erfolgen. Auch ein Vernieten oder Verschrauben der Verstärkungselemente 35d mit den Enden des bandförmigen Übertragungsgliedes 32d ist denkbar.

In Fig. 16 und 17 ist nun eine Ausführungsform eines kompletten Gelenkes gezeigt, welches - im Gegensatz zur Ausführungsform nach Fig. 3 bis 6 - nicht nur Drehmomente, sondern gleichzeitig auch Axialkräfte zu übertragen vermag. Dieses Gelenk kann also in Schaltgestängen der in Fig. 1 und 2 gezeigten Art eingesetzt werden.

Die beiden zu verbindenden Wellen sind wiederum (wie in Fig. 3 bis 6) mit 28 und 29 bezeichnet. Wie insbesondere Fig. 16 erkennen läßt, ist am Ende der Welle 28 ein Ausleger 40 angeschweißt, der mehrfach abgewinkelt und asymmetrisch ausgebildet ist. Auch am Ende der anderen Welle 29 ist eine Ausleger -mit 41 beziffert - angeschweißt, der jedoch - wie Fig. 17 zeigt - lediglich die Form eines einfachen Winkelbleches hat.

Zwischen den beiden einander zugewandten Enden der Wellen 28, 29 ist ein insgesamt mit 32e bezeichnetes bandförmiges Übertragungsglied angeordnet, dessen Lage mit Bezug auf die beiden Wellenenden jedoch im Unterschied zur Ausführungsform nach Fig. 3 bis 6 nicht symmetrisch, vielmehr asymmetrisch ist. Das (ähnlich der Ausführungsform nach Fig. 10 und 11 gestaltete) bandförmige Übertragungsglied 32e besitzt zwei einstückig angeformte ösenförmige Verstärkungselemente 42 und 43. Am (in Fig. 16 oberen) Verstärkungselement 42 greift der Ausleger 40 mittels eines Halters 44, an dem ein Bolzen 45 angeschweißt ist, an. Am (in Fig. 16 unteren) Ausleger 41 ist entsprechend ein Bolzen 46 angeschweißt, der in das ösenförmige Verstärkungselement 43 eingreift.

Aufgrund der beschriebenen konstruktiven Gegebenheiten wird die Drehbewegung der Welle 29 bzw. das zu übertragende Drehmoment von dem oberen Bereich 44 des Verstärkungselements 40 über den Bolzen 45 auf das bandförmige Übertragungsglied 32e und weiter durch den Bolzen 46 über den Ausleger 41 auf die Welle 28 übertragen. Eventuelle (in Fig. 16 und 17 nicht gezeigte) Winkelstellungen der Wellen 28, 29 zueinander werden hierbei durch das bandförmige Übertragungsglied 32e ähnlich wie bei der Ausführungsform nach Fig. 3 bis 6 (vgl. hierzu obige Beschreibung) ausgeglichen.

Zur Übertragung auch der Axialkräfte und -bewegungen zwischen den Wellen 28, 29 ist nun bei der Ausführungsform nach Fig. 16 und 17 folgende weitere Besonderheit vorgesehen. Das zu dem genannten Zweck genau zwischen den beiden einander zugewandten Wellenenden liegende (untere) Verstärkungselement 43 weist beidseitig zwei einstückig angeformte kugelartig ausgebildete Pufferelemente 47, 48 auf. Hierbei liegt - jeweils spielfrei - das Pufferelement 47 an dem nach oben abgebogenen Schenkel 49 des U-förmigen Bereichs des Auslegers 40 an, und das andere Pufferelement 48 kommt mit dem gegenüberliegenden anderen U-Schenkel 50 des Auslegers 40 zur Anlage. Die Axialkräfte werden also spielfrei und - bei entsprechend starrer Ausbildung der Pufferelemente 47, 48 - auch dämpfungsfrei von der Welle 29 zunächst an das (untere) Verstärkungselement 43 weitergeleitet. Von dort erfolgt die weitere Übertragung durch den Bolzen 46 über den Ausleger 41 auf die Welle 28.

Die Variante nach Fig. 18 und 19 entspricht in den meisten Einzelheiten der Ausführungsform nach Fig. 16 und 17, weshalb die betreffenden übereinstimmenden Teile der Einfachheit halber mit denselben Bezugszeichen wie dort versehen sind. Die Besonderheit bei der Ausführungsform nach Fig. 18 und 19 besteht darin, daß eine Übertragung von Axialkräften bzw. -bewegungen jeweils erst nach Überbrückung eines Spiels von 1/2 S (bezogen auf die in Fig. 18 und 19 gezeigte Mittelposition des bandförmigen Übertragungsgliedes 32f) möglich ist. Hierzu besitzt das hier mit 51 bezeichnete (untere) Verstärkungselement - ähnlich wie bei der Ausführungsform nach Fig. 16 und 17 - zwei seitlich angeformte kugelartige Pufferelemente 52, 53, die indessen - im Gegensatz zu Fig. 16 und 17 - nicht an den zugeordneten Flächen 49 bzw. 50 des Auslegers 40 anliegen, sondern sich im axialen Abstand von je 1/2 S zu diesen Flächen befinden. Hierdurch ergibt sich das bereits obengenannte Spiel bei der Übertragung von Axialkräften und -bewegungen zwischen den Wellen 28, 29.

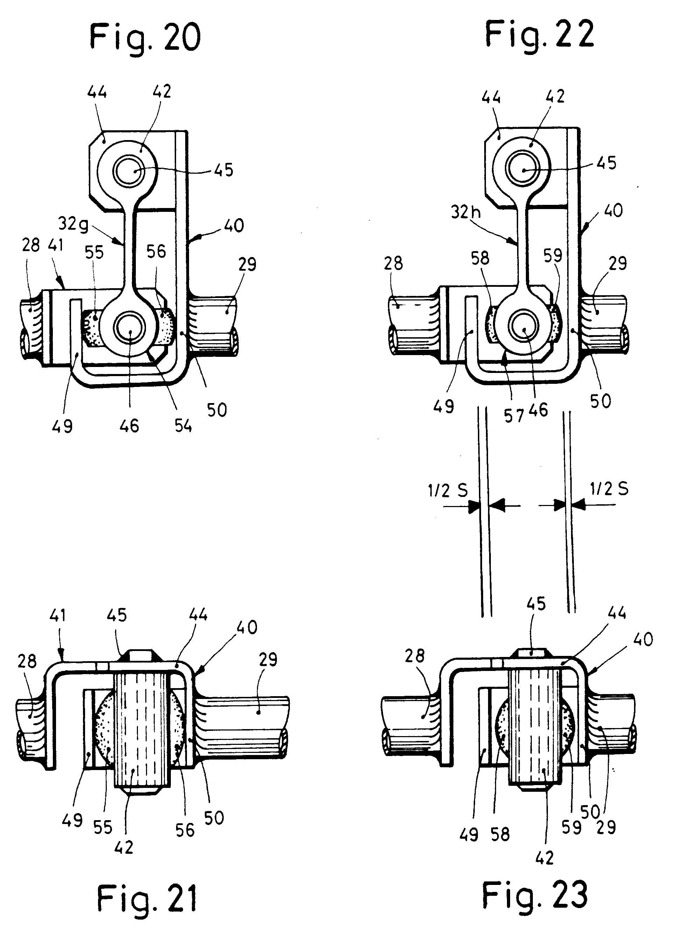

Fig. 20 und 21 zeigen ein Gelenkvariante, die weitgehend derjenigen nach Fig. 16 und 17 gleicht. Es konnten daher überwiegend dieselben Bezugszeichen verwendet werden. Das bandförmige Übertragungsglied ist hier aber mit 32g bezeichnet.

Die Besonderheit der Ausführungsform nach Fig. 20, 21 liegt in der Ausgestaltung des mit 54 bezifferten unteren Verstärkungselements. Dieses besitzt beidseitig befestigte kugelartige Pufferelemente 55, 56, die jedoch aus einem anderen Material als das Verstärkungselement 54, nämlich aus einem elastischen, stoßdämpfenden Werkstoff, bestehen. Die Pufferelemente 55, 56 können auf das Verstärkungselement 54 aufgesteckt, aufgespritzt oder - wenn sie aus Gummi gefertigt sind - aufvulkanisiert werden.

Bei dem Gelenk nach Fig. 20, 21 erfolgt somit die Übertragung von Axialkräften - wie bei dem Gelenk nach Fig. 16, 17 -spielfrei, jedoch - und hierin liegt der Unterschied zu Fig. 16 und 17 - elastisch mit Dämpfung.

Die Ausführungsform nach Fig. 22 und 23 entspricht im wesentlichen der oben beschriebenen Ausführungsform nach Fig. 18 und 19. Die übereinstimmenden Teile sind daher mit denselben Bezugszeichen wie dort versehen. Übereinstimmung besteht ferner insoweit, als auch nach Fig. 22, 23 ein axiales Spiel von je 1/2 S bei der Übertragung axialer Kräfte zwischen den Wellen 28, 29 vorgesehen ist. Das Charakteristische der Ausführungsform nach Fig. 22, 23 liegt aber in einer Kombination der Besonderheiten, durch welche sich das Gelenk nach Fig. 18, 19 einerseits und das Gelenk nach Fig. 20, 21 andererseits auszeichnet. Das mit 32h bezeichnete bandförmige Übertragungsglied besitzt hierzu ein unteres Verstärkungselement 57, an dem beidseitig - ähnlich wie bei der Ausführungsform nach Fig. 20 und 21 - kugelartige Pufferelemente 58, 59 aus einem elastisch-dämpfenden Material, z. B. Gummi, befestigt sind. Die Pufferelemente 58, 59 liegen jedoch nicht spielfrei an den Schenkeln 49, 50 des Auslegers 40 an, sondern es ist - entsprechend der Ausführungsform nach Fig.

18 und 19 -beidseitig ein axialer Abstand von je 1/2 S vorgesehen. Das Gelenk nach Fig. 22, 23 ermöglicht also eine Übertragung von Axialkräften zwischen den Wellen 28, 29 mit Spiel und mit Dämpfung.

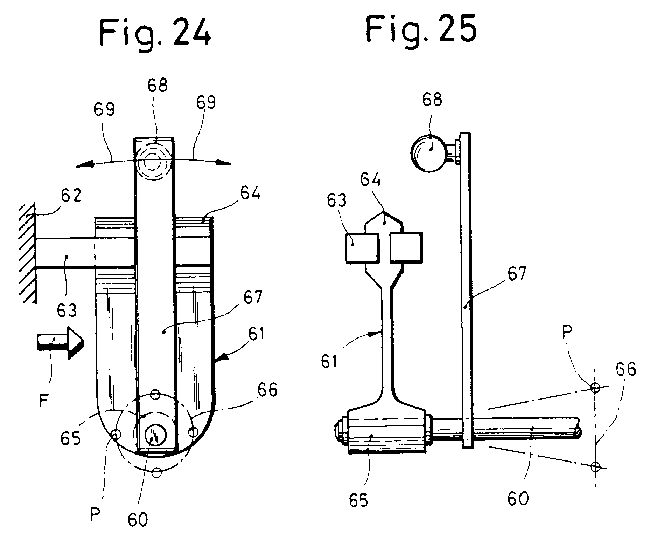

Bei der in Fig. 24 und 25 gezeigten Ausführungsform des erfindungsgemäßen Gelenks bezeichnet 60 eine Betätigungsstange, die über ein bandförmiges Übertragungsglied 61 an einem bei 62 fest eingespannten Lagerbock 63 angelenkt sit. Wie insbesondere Fig. 25 erkennen läßt, ist das bandförmige Übertragungsglied 61 mit seinem oberen Verstärkungselement 64, welches (ähnlich wie bei der Ausführungsform nach Fig. 12 und 13) doppel-T-förmig ausgebildet ist, im Lagerbock 63 eingepreßt, während die Stange 60 axial gesichert im unteren Verstärkungselement 65 drehbar gelagert ist. Der Punkt P auf der Stange 60 soll die gezeigten Auslenkungen auf einem Kreis 66 ausführen können. Ein auf der Stange 60 befestigter Hebel 67 muß über eine Kugel 68 Kräfte in Pfeilrichtung 69 übertragen können, wenn auf die Stange 60 ein Drehmoment gegeben wird. Die beschriebene Übertragung von Kräften, Drehmomenten und Bewegungen ist nur möglich, weil das bandförmige Übertragungsglied 61 die Reaktionskräfte über den Querschnitt mit seinen hohen Widerstandsmoment aufzunehmen vermag.

**Patentansprüche**

1. Flexible Gelenkverbindung zweier Wellen, insbesondere für Schaltgestänge von Kraftfahrzeuggetrieben, wobei die einander zugewandten Wellenenden durch ein bandförmiges Übertragungsglied miteinander verbunden sind, dadurch gekennzeichnet, daß das bandförmige Übertragungsglied (32, 32a bis 32h) im Montagezustand rechteckig/ebenflächig oder im wesentlichen rechteckig/ebenflächig ausgebildet und (im unverspannten Zustand) orthogonal oder im wesentlichen orthogonal zur Wellenachse (33, 34) zwischen den beiden Wellenenden (28, 29) angeordnet ist, und daß das eine Wellenende (28) am einen Bandende und das andere Wellenende (29) am gegenüberliegenden anderen Bandende angreift, derart, daß das bandförmige Übertragungsglied (32, 32a bis 32h) ausschließlich oder nahezu ausschließlich zur Drehmomentübertragung zwischen den beiden Wellen dient.

2. Flexible Gelenkverbindung nach Anspruch 1, dadurch gekennzeichnet, daß die beiden gegenüberliegenden Enden des bandförmigen Übertragungsglieds (32, 32a bis 32h, 61) Verstärkungselemente (35, 35a bis 35d, 42, 43, 51, 54, 57, 64, 65) aufweisen, mittels derer sie mit an den zugeordneten Wellenenden befestigten Auslegern (30, 31, 40, 41) zusammenwirken.

3. Flexible Gelenkverbindung nach Anspruch 1 oder 2, dadurch gekennzeichnet, daß das bandförmige Übertragungsglied (32, 32a bis 32h, 61) aus thermoplastischem Kunststoff besteht und als Spritzteil ausgebildet ist.

4. Flexible Gelenkverbindung nach einem oder mehreren der vorstehenden Ansprüche, dadurch gekennzeichnet, daß das bandförmige Übertragungsglied (32, 32a bis 32h, 61) Einlagen aus Gewebe oder Draht enthält.

5. Flexible Gelenkverbindung nach Anspruch 2, 3 oder 4, dadurch gekennzeichnet, daß die Verstärkungselemente (35, 35a bis 35c, 42, 43, 51, 54, 57, 64, 65) einstückig an das bandförmige Übertragungsglied (32, 32a bis 32c, 32e bis 32h, 61) angeformt, vorzugsweise angespritzt sind.

6. Flexible Gelenkverbindung nach Anspruch 2, 3 oder 4, dadurch gekennzeichnet, daß die Verstärkungselemente (35d) aus einem anderen Material als das eigentliche bandförmige Übertragungsglied (32d) bestehen und daß die Bandenden in die Verstärkungselemente eingeklebt, eingeklemmt oder eingespritzt sind (Fig. 14 und 15).

7. Flexible Gelenkverbindung nach Anspruch 2, 3 oder 4, dadurch gekennzeichnet, daß die Verstärkungselemente (35d) aus einem anderen Material als das eigentliche bandförmige Übertragungsglied (32d) bestehen und daß die Bandenden mit den Verstärkungselementen (35d) vernietet oder verschraubt sind (Fig. 14 und 15).

8. Flexible Gelenkverbindung nach einem oder mehreren der Ansprüche 2 bis 7, dadurch gekennzeichnet, daß die Verstärkungselemente (35, 35a, 35b, 35d, 42, 43, 51, 54, 57) ösenartig ausgebildet und auf die jeweils zugeordneten Enden (44, 45, 46) der Ausleger (30, 31, 40, 41) aufgepreßt sind (Fig. 3 bis 6 und 16 bis 23).

9. Flexible Gelenkverbindung nach einem oder mehreren der Ansprüche 2 bis 7, dadurch gekennzeichnet, daß die Verstärkungselemente (35, 35c, 64) doppel-T-förmig ausgebildet und in die jeweils zugeordneten Ausleger (63) eingehängt oder eingepreßt sind (Fig. 12, 13, 24 und 25).

10. Flexible Gelenkverbindung nach einem oder mehreren der vorstehenden Ansprüche dadurch gekennzeichnet, daß das bandförmige Übertragungsglied (32), einschließlich seiner beiseitigen Verstärkungselemente (35), symmetrisch ausgebildet und symmetrisch zwischen den beiden zu verbindenden Wellenenden (28, 29) angeordnet ist, derart, daß sich (im unverspannten Zustand) die Wellenachse (33, 34) mit der Mittelachse des bandförmigen Übertragungsgliedes (32) deckt (Fig. 3 bis 6).

11. Flexible Gelenkverbindung nach Anspruch 10, dadurch gekennzeichnet, daß an jedem Wellenende (28 bzw. 29) ein winkelförmiger Ausleger (30 bzw. 31) befestigt ist, der am jeweils zugeordneten Verstärkungselement (35) angreift.

12. Flexible Gelenkverbindung nach einem oder mehreren der Ansprüche 1 bis 9, dadurch gekennzeichnet, daß das bandförmige Übertragungsglied (32e bis 32h) asymmetrisch zwischen den beiden zu verbindenden Wellenenden (28, 29) angeordnet ist, derart, daß das eine (43, 51, 54, 57) der beiden Verstärkungselemente (42; 43, 51, 54, 57) koaxial zu den Wellen (28, 29) zu liegen kommt, und daß beidseitig an dem zwischen den Wellenenden liegenden Verstärkungselement (43, 51, 54, 57) Pufferelemente (47, 48; 52, 53; 55, 56; 58, 59) zur Übertragung axialer kräfte von einer Welle (28) auf die andere (29) angeordnet sind (Fig. 16 bis 23).

13. Flexible Gelenkverbindung nach Anspruch 12, dadurch gekennzeichnet, daß die Pufferelemente (47, 48; 52, 53; 55, 56; 58, 59) kugelförmig oder im wesentlichen kugelförmig ausgebildet sind.

14. Flexible Gelenkverbindung nach Anspruch 12 oder 13, dadurch gekennzeichnet, daß die Pufferelemente (55, 56; 58, 59) aus einem elastischen Material bestehen (Fig. 20 bis 23).

15. Flexible Gelenkverbindung nach Anspruch 12, 13 oder 14, dadurch gekennzeichnet, daß die Pufferelemente (55, 56; 58, 59) aus einem stoßdämpfenden Material bestehen (Fig. 20 bis 23).

16. Flexible Gelenkverbindung nach einem oder mehreren der Ansprüche 12 bis 15, dadurch gekennzeichnet, daß die Pufferelemente (47, 48; 52, 53) einstückig an das betreffende Verstärkungselement (43 bzw. 51) angeformt, vorzugsweise angespritzt sind (Fig. 16 bis 19).

17. Flexible Gelenkverbindung nach einem oder mehreren der Ansprüche 12 bis 15, dadurch gekennzeichnet, daß die Pufferelemente (55, 56; 58, 59) aus einem anderen Werkstoff als das betreffende Verstärkungselement (54 bzw. 57) bestehen und an dem Verstärkungselement - vorzugsweise durch Aufstecken, Aufspritzen oder (wenn sie aus Gummi bestehen) Aufvulkanisieren - befestigt sind (Fig. 20 bis 23).

18. Flexible Gelenkverbindung nach einem oder mehreren der Ansprüche 12 bis 17, dadurch gekennzeichnet, daß zwischen den Pufferelementen (52, 53 bzw. 58, 59) und dem jeweils angrenzenden Wellenende (49, 50) axiales Spiel (jeweils 1/2 S) vorgesehen ist (Fig. 18, 19 und 22, 23).

19. Flexible Gelenkverbindung nach einem oder mehreren der vorstehenden Ansprüche, bei der zwischen den miteinander zu verbindenden Teilen (62, 63 und 67, 68) ein bandförmiges Übertragungsglied (61), welches zur Aufnahme von Drehmomenten dient, angeordnet ist, dadurch gekennzeichnet, daß das bandförmige Übertragungsglied (61) an einem Ende mittels eines Verstärkungselements (64) an einem fest eingespannten Lagerbock (63) befestigt ist und daß in einem am gegenüberliegenden Ende des bandförmigen Übertragungsgliedes (61) befindlichen Verstärkungselement (65) eine Stange (60) axial unbeweglich, jedoch drehbar gelagert ist, und daß an der Stange (60) ein Hebel (67) angreift, an dessen freiem Ende eine Kugel (68) befestigt ist, derart, daß auf die Kugel (68) aufgebrachte Kräfte, die in Dreh- und/oder in Axialrichtung der Stange (60) gerichtet sind, durch den Hebel (67) auf die Stange (60) übertragbar sind (Fig. 24 und 25).

**Claims**

1. Flexible knuckle joint between two shafts, especially for gear shift linkages in motor vehicle transmissions, in which the shaft ends facing each other are connected together by means of a web-like transfer member, characterised in that the web-like transfer member (32, 32a to 32h) in the assembled state is constructed to be of rectangular/even surface or substantially rectangular/even surface and in the (unstressed state) it is arranged between the two shaft ends (28, 29) orthogonally or substantially orthogonally to the shaft axis (33, 34), and that one shaft end (28) engages with one web end and the other shaft end (29) engages with the other web end opposite in such a way that the web-like transfer member (32, 32a to 32h) serves exclusively or almost exclusively to transfer the torque between the two shafts.

2. Flexible knuckle joint according to claim 1, characterised in that the two oppositely arranged ends of the web-like transfer member (32, 32a to 32h, 61) have strengthening elements (35, 35a to 35d, 42, 43, 51, 54, 57, 64, 65) through which they cooperate with the brackets (30, 31, 40, 41) fixed to the associated shaft ends.

3. Flexible knuckle joint according to claim 1 or 2, characterised in that the web-like transfer member (32, 32a to 32h, 61) is made from thermoplastics and constructed as an injection moulded part.

4. Flexible knuckle joint according to one or more of the preceding claims, characterised in that the web-like transfer member (32, 32a to 32h, 61) contains insets of fabric or wire.

5. Flexible knuckle joint according to claim 2, 3 or 4, characterised in that the strengthening elements (35, 35a to 35c, 42, 43, 51, 54, 57, 64, 65) are moulded in one to the web-like transfer member (32, 32a to 32c, 32e to 32h, 61), preferably injection moulded to it.

6. Flexible knuckle joint according to claim 2, 3 or 4, characterised in that the strengthening elements (35d) are made from another material than the actual web-like transfer member (32d) itself, and that the web ends are adhesively fixed within the strengthening elements, wedged-in or injection moulded into the strengthening elements (Fig. 14 and 15).

7. Flexible knuckle joint according to claim 2, 3 or 4, characterised in that the strengthening elements (35d) consist of a different material than the actual web-like transfer member (32d) and that the web ends are riveted to the strengthening elements (35d) or screw-connected to the same (Fig. 14 and 15).

8. Flexible knuckle joint according to one or more of the claims 2 to 7, characterised in that the strengthening elements (35, 35a, 35b, 35d, 42, 43, 51, 54, 57) are constructed with eyelets and pressed onto the respective ends (44, 45, 46) of the brackets (30, 31, 40, 41) (Fig. 3 to 6 and 16 to 23).

9. Flexible knuckle joint according to one or more of the claims 2 to 7, characterised in that the strengthening elements (35, 35c, 64) are constructed as a double T and suspended from or pressed into the respective brackets (63) (Fig. 12, 13, 24 and 25).

10. Flexible knuckle joint according to one or more of the preceding claims, characterised in that the web-like transfer member (32), inclusive of its strengthening elements (35) on both sides, is symmetrically constructed and symmetrically arranged between the two shaft ends (28, 29) to be connected, in such a way that (in the unstressed state) the shaft axis (33, 34) covers the centre axis of the web-like transfer member (32) (Fig. 3 to 6).

11. Flexible knuckle joint according to claim 10, characterised in that to each shaft end (28 or 29) there is connected an angular bracket (30 or 31) which engages with the respective strengthening element (35).

12. Flexible knuckle joint according to one or more of the claims 1 to 9, characterised in that the web-like transfer member (32e to 32h) is arranged asymmetrically between the two shaft ends (28, 29) to be connected, in such a way that one (43, 51, 54, 57) of the two strengthening elements (42; 43, 51, 54, 57) comes to rest coaxially with the shafts (28, 29), and that on both sides of the strengthening element (43, 51, 54, 57), located between the shaft ends, are arranged buffer elements (47, 48; 52, 53; 55, 56; 58, 59) for transferring axial forces from one shaft (28) to the other shaft (29) (Fig. 16 to 23).

13. Flexible knuckle joint according to claim 12, characterised in that the buffer elements (47, 48; 52, 53; 55, 56; 58, 59) are constructed to be spherical or substantially spherical.

14. Flexible knuckle joint according to claim 12 or 13, characterised in that the buffer elements (55, 56; 58, 59) consist of an elastic material (Fig. 20 to 23).

15. Flexible knuckle joint according to claim 12, 13 or 14, characterised in that the buffer elements (55, 56; 58, 59) consist of a shock-absorbing material (Fig. 20 to 23).

**16.** Flexible knuckle joint according to one or more of the claims 12 to 15, characterised in that the buffer elements (47, 48; 52, 53) are formed in one piece with the respective strengthening element (43 or 51), preferably injection moulded to the same (Fig. 16 to 19).

**17.** Flexible knuckle joint according to one or more of the claims 12 to 15, characterised in that the buffer elements (55, 56; 58, 59) consist of another material than the respective strengthening element (54 or 57) and are fixed to the strengthening element - preferably by mounting on, injection moulding or vulcanising (when made from rubber) (Fig. 20 to 23).

**18.** Flexible knuckle joint according to one or more of the claims 12 to 17, characterised in that axial play (1/2 S in each case) is provided between the buffer elements (52, 53 or 58, 59) and the respective adjacent shaft end (49, 50).

**19.** Flexible knuckle joint according to one or more of the preceding claims, in which a web-like transfer member (61), which serves to receive torque, is arranged between the interconnecting parts (62, 63 and 67, 68), characterised in that the web-like transfer member (61) is fixed at one end by means of a strengthening element (64) to a firmly clamped bearing block (63) and that in a strengthening element (65) located at the opposite end of the web-like transfer member (61) there is mounted a bar (60), immovable axially but rotatable, and that the bar (60) is engaged by a lever (67) whose free end has a ball (68) fixed to it, in such a way that forces applied to the ball (68), which are directed in the rotary and/or axial direction of the bar (60), can be transferred by the lever (67) to the bar (60) (Fig. 24 and 25).

**Revendications**

**1.** Joint articulé flexible pour relier entre eux deux arbres, en particulier pour des tringleries de commande de boîtes de vitesse de véhicules automobiles, dans lequel les bouts d'arbre tournés l'un vers l'autre sont reliés entre eux au moyen d'un élément de transmission en forme de bande, caractérisé en ce que l'élément de transmission en forme de bande (32, 32a à 32h) est rectangulaire/plan ou essentiellement rectangulaire/plan au montage et (à l'état libre) est placé entre les deux bouts d'arbre (28, 29) perpendiculairement ou essentiellement perpendiculairement à l'axe de l'arbre (33, 34) et en ce que l'un des bouts d'arbre (28) agit sur l'une des extrémités et l'autre bout d'arbre (29) agit sur l'extrémité opposée de la bande de manière telle que l'élément de transmission en forme de bande (32, 32a à 32h) serve exclusivement ou presque exclusivement à la transmission du couple entre les deux bouts d'arbre.

**2.** Joint articulé flexible selon la revendication 1, caractérisé en ce que les deux extrémités opposées de l'élément de transmission en forme de bande (32, 32a à 32h, 61) sont munies d'éléments de renfort (35, 35a à 35d, 42, 43, 51, 54, 57, 64, 65) par l'intermédiaire desquels elles coopèrent avec des bras (30, 31, 40, 41) fixés sur les bouts d'arbres correspondants.

**3.** Joint articulé flexible selon la revendication 1 ou 2, caractérisé en ce que l'élément de transmission en forme de bande (32, 32a à 32h, 61) est réalisé en matière thermoplastique et se présente sous la forme d'une pièce moulée par injection.

**4.** Joint articulé flexible selon une ou plusieurs des revendications précédentes, caractérisé en ce que l'élément de transmission en forme de bande (32, 32a à 32h, 61) contient des couches de tissus ou de fil métallique.

**5.** Joint articulé flexible selon la revendication 2, 3 ou 4, caractérisé en ce que les éléments de renfort (35, 35a à 35c, 42, 43, 51, 54, 57, 64, 65) sont réalisés d'un pièce avec l'élément de transmission en forme de bande (32, 32a à 32c, 32e à 32h, 61) de préférence par moulage par injection.

**6.** Joint articulé flexible selon la revendication 2, 3 ou 4, caractérisé en ce que les éléments de renfort (35d) sont réalisées en un matériau différent de celui de l'élément de transmission en forme de bande (32d) à proprement parler et en ce que les extrémités de la bande sont collées, bloquées ou noyées dans les éléments de renfort (figures 14 et 15).

**7.** Joint articulé flexible selon la revendication 2, 3 ou 4, caractérisé en ce que les éléments de renfort (35d) son réalisées en un matériau différent de celui de l'élément de transmission en forme de bande (32d) à proprement parler et en ce que les extrémités de la bande sont rivées ou vissées sur les éléments de renfort (35d) (figures 14 et 15).

**8.** Joint articulé flexible selon une ou plusieurs des revendications 2 à 7, caractérisé en ce que les éléments de renfort (35, 35a, 35b, 35d, 42, 43, 51, 54, 57) ont une forme d'oeillet et sont emmanchés sur les extrémités correspondantes (44, 45, 46) des bras (30, 31, 40, 41) (Figures 3 à 6 et 16 à 23).

9. Joint articulé flexible selon une ou plusieurs des revendications 2 à 7, caractérisé en ce que les éléments de renfort (35, 35c, 64) ont la forme d'un Té et sont accrochés ou emmanchés sur les bras (63) correspondants (Figures 12, 13, 24 et 25).

10. Joint articulé flexible selon une ou plusieurs des revendications précédentes, caractérisé en ce que l'élément de transmission en forme de bande (32) avec ses éléments de renfort (35) situés des deux côtés est symétrique et est disposé symétriquement entre les deux bouts d'arbre (28, 29) à relier de manière telle que (à l'état libre) l'axe de l'arbre (33, 34) coïncide avec l'axe médian de l'élément de transmission en forme de bande (32) (figures 3 à 6).

11. Joint articulé flexible selon la revendication 10, caractérisé en ce qu'un bras en équerre (30 ou 31) est fixé sur chaque bout d'arbre (28 ou 29) et agit sur l'élément de renfort (35) associé.

12. Joint articulé flexible selon une ou plusieurs des revendications 1 à 9, caractérisé en ce que l'élément de transmission en forme de bande (32e à 32h) est disposé de manière asymétrique entre les deux bouts d'arbre (28, 29) à relier de manière telle que l'un (43, 51, 54, 57) des deux éléments de renfort (42; 43, 51, 54, 57) soit coaxial aux arbres (28, 29) et en ce que des éléments formant butée (47, 48; 52, 53; 55, 56; 58, 59) sont disposés de part et d'autre sur l'élément de renfort (43, 51, 54, 57) situé entre les deux bouts d'arbre afin de transmettre les efforts axiaux d'un arbre (28) à l'autre (29) (figures 16 à 23).

13. Joint articulé flexible selon la revendication 12, caractérisé en ce que les éléments formant butée (47, 48; 52, 53; 55, 56; 58, 59) sont sphériques ou essentiellement sphériques.

14. Joint articulé flexible selon la revendication 12 ou 13, caractérisé en ce que les éléments formant butée (55, 56; 58, 59) sont réalisés en un matériau élastique (figures 20 à 23).

15. Joint articulé flexible selon la revendication 12, 13 ou 14 caractérisé en ce que les éléments formant butée (55, 56; 58, 59) sont réalisés en un matériau amortissant les chocs (figures 20 à 23).

16. Joint articulé flexible selon une ou plusieurs des revendications 12 à 15, caractérisé en ce que les éléments formant butée (47, 48; 52, 53) sont réalisés d'une pièce avec l'élément de renfort (43 ou 51) concerné de préférence par moulage par injection (figures 16 à 19).

17. Joint articulé flexible selon une ou plusieurs des revendications 12 à 15, caractérisé en ce que les éléments formant butée (55, 56; 58, 59) sont réalisés en un matériau différent de celui de l'élément de renfort (54 ou 57) concerné et sont fixés sur l'élément de renfort - de préférence par emboîtement, surmoulage ou par vulcanisation (lorsque ceux-ci sont en caoutchouc) - (figures 20 à 23).

18. Joint articulé flexible selon une ou plusieurs des revendications 12 à 17, caractérisé en ce qu'un jeu axial (respectivement 1/2 S) est prévu entre les éléments formant butée (52, 53 ou 58, 59) et le bout d'arbre voisin (49, 50) (figures 18, 19 et 22, 23).

19. Joint articulé flexible selon une ou plusieurs des revendications précédentes dans lequel un élément de transmission en forme de bande (61) sur lequel sont appliqués les couples est placé entre les éléments (62, 63 et 67, 68) à relier entre eux, caractérisé en ce que l'élément de transmission en forme de bande (61) est fixé à une extrémité à un support (63) fixe par l'intermédiaire d'un élément de renfort (64), en ce qu'une tige (60) est montée fixe dans la direction axiale mais mobile en rotation dans un élément de renfort (65) situé à une extrémité opposée de l'élément de transmission en forme de bande (61) et en ce qu'un levier (67) portant à son extrémité libre une sphère (68) agit sur la tige (60) de manière telle que les forces appliquées sur la sphère (68) et dirigées dans la direction tangentielle et/ou axiale de la tige (60) soient transmises à la tige (60) par le levier (67) (figures 24 et 25).

Fig.1

Fig.2

Fig.3

Fig 4'

Fig.5

Fig.7a  Fig.7b

Fig.6

Fig.7c

# Fig.8

# Fig.9

# Fig.10

# Fig.11

# Fig.12

# Fig.13

# Fig.14

# Fig.15

# Fig.16

# Fig.18

# Fig.17

# Fig.19

## Fig. 20

## Fig. 22

## Fig. 21

## Fig. 23

# Fig. 24

# Fig. 25